# EUROPÄISCHE PATENTANMELDUNG

(11) **EP 1 595 445 A1**
(43) Veröffentlichungstag der Anmeldung: **16.11.2005**
(21) Anmeldenummer: 05009992.8
(22) Anmeldetag: 07.05.2005
(51) Int. Cl.: A01K 55/00

(54) **Hebevorrichtung für Magazinbeuten**

(30) Priorität: 11.05.2004 DE 102004023088
(71) Anmelder: Ringel, Helmut, 52382 Niederzier (DE)
(72) Erfinder: Ringel, Helmut, 52382 Niederzier (DE)

(57) **Zusammenfassung**

Verfahren und Vorrichtung für das Anheben und Abschwenken von Zargen bei Bienenbeuten, wodurch ein freier Zugang zur offenen Beute ermöglicht wird.

Hierzu wird eine Windewelle 8 über der Mitte der Magazinbeute platziert (Pos.A), die anzuhebende Zarge 2c mit der Windewelle 8 mit mindestens zwei Seilen 7a und 7b verbunden, durch Drehen der Windewelle 8 die Zarge 2c angehoben und danach seitlich von der restlichen Beute abgeschwenkt (Pos.B).

## Beschreibung

### Einleitung

Die Erfindung bezieht sich auf ein Verfahren und eine Vorrichtung zum vorrübergehenden Öffnen von Bienenbeuten, insbesondere von Magazinbeuten. Magazinbeuten werden häufig bei der Bienenhaltung verwendet. Diese Beuten bestehen aus einem Bodenelement, das ein Flugloch für die Bienen enthält und auf dem ein Stapel von Zargen steht, in denen sich das Bienenvolk auf eingehängten Brut- und Honigwaben befindet. Der Zargenstapel wird oben durch einen Deckel abgeschlossen.

### Stand der Technik

Die AT 401 324 B beschreibt eine Vorrichtung, bei der die Zargen mit Hilfe eines Parallelogrammgestänges angehoben und abgeschwenkt werden.
Eine ähnliche Einrichtung gibt die AT 405 892 B wieder, bei der mit Hilfe einer Federwaage beim Handtieren der Zargen auch ihr Gewicht ermittelt wird.
Bei dem Gebrauchsmuster G 88 03 665.0 werden die Zargen u. a. durch einen hydraulischen Hubkolben angehoben.
Eine weitere Hubvorrichtung ist in der DE 198 23 107 A1 beschrieben. Danach werden die Zargen mittels einer Seilzugtechnik voneinander abgehoben.

### Aufgabe und Lösung

Zur Kontrolle und Pflege des Bienenvolkes muss der Imker vor allem während der Schwarmzeit die Zargen von einander trennen und abheben, um an die einzelnen Waben zu gelangen. Da die Zargen bei einer Größe von etwa L × B × H = 50 cm x 50 cm × 25 cm ein Gewicht von 25 kg erreichen, ist dies häufig eine mühevolle Arbeit, die u.a. zur Überbelastung der Wirbelsäule des Imkers führen kann. Im weiteren ist es für die Bewirtschaftung der Bienen von Vorteil das aktuelle Gewicht der Zargen zu wissen, um u. a. Kenntnis über die Brutaktivität und den Menge des eingetragenen Honigs zu erlangen.
Bei den Arbeiten an einer Bienenbeute ist eine ruhige und stoßfreie Arbeitsweise von besonderer Bedeutung, um die Bienen nicht zu beunruhigen.
Es ist die Aufgabe der Erfindung, ein Verfahren und eine Vorrichtung zu schaffen, mit deren Hilfe die Zargen einer Magazinbeute einfach, ruhig und ohne besondere Kraftanstrengung von einander getrennt, abgehoben und beiseite geschwenkt werden, sodass ein freier Zugang zu den jeweils verbliebenen Zargen der Magazinbeute gegeben wird. Dabei ist jeweils eine Zarge oder auch nach Bedarf zwei oder mehrere Zargen gleichzeitig abzuheben und beiseite zu schenken. Der freie Zugang zu den jeweils verbleibenden Zargen der Magazinbeute sollte sich über die hintere Seite - das ist die dem Flugloch gegenüber liegende Seite - und nach Möglichkeit auch über die rechte und linke Seite der Beute erstrecken. Im weiteren soll das Gewicht der abgehobenen Zargen auf einfache Weise ermittelt werden.

Die Aufgabe wird dadurch gelöst, dass jeweils eine oder gleichzeitig mehrere Zargen mit einer Winde angehoben und dann von der restlichen Magazinbeute abgeschwenkt werden, wobei die Windenwelle mit Hilfe eines Rahmens in der Mitte über der Magazinbeute platziert wird und sich über die gesamte Breite der Magazinbeute erstreckt. An beiden Enden der Windenwelle wird die Windenwelle mit z.B. einem Seil mit der Zarge verbunden, die angehoben werden soll. In diesem Zustand kann entsprechend der vorgegebenen Windenübersetzung die Zarge mit geringer Kraftanstrengung angehoben werden. Die Windenwelle wird in der jeweils gewünschten Stellung mit der angehobenen Zarge z. B. durch ein Sperrzahnrad mit Sperrklinke oder durch einen Sperrarm arretiert.

Eine Ausgestaltung der Erfindung ist, dass der Rahmen zunächst zum Anheben der Zargen in einer schrägen Position A über der Magazinbeute steht und in dieser Stellung durch Stützen abgestützt wird. Nach dem Anheben des Teils der Zargen, die abgeschwenkt werden sollen, kann nun der Rahmen mit Winde und angehängten Zargen aus der Ausgangsschräglage der Pos. A in eine gegenüber liegende neue Schräglage der Pos. B geschwenkt werden.
Der Mittelpunkt dieser Schenkbewegung ist der Abstützpunkt des Rahmens auf dem Boden. In der Mittelstellung zwischen der ersten Pos. A und der zweiten Pos. B steht der Rahmen senkrecht. Der Neigungswinkel des Rahmens mit einer Senkrechten in der Pos. A ist nahezu gleich dem Neigungswinkel des Rahmens in der Pos. B, nur entgegengesetzt zur Senkrechten. Auf diese Weise beschreiben die angehobenen Zargen bei der Schwenkbewegung einen Kreisbogen mit geringer Überhöhung, wodurch nur eine geringe Kraft für die Schwenkbewegung erforderlich ist.

Mit der Schwenkbewegung sind die angehobenen Zargen von der restlichen Magazinbeute soweit entfernt worden, dass der Imker zur restlichen Magazinbeute an drei Seiten und von oben freien Zugang hat.
Durch weitere Stützen, die an dem Rahmen befestigt sind, wird der Rahmen mit den abgeschwenkten Zargen in der neuen Position B gehalten. Für die Anpassung an unebenes Gelände sind die Stützen justierbar bzw. es müssen z. B. Unterlegkeile zum Geländeausgleich verwendet werden.

Anstatt der vier festen Stützen können auch zwei bewegliche Stützen verwendet werden, die bei der Änderung der Position des Rahmens entsprechend nachgeführt werden müssen.

Eine weitere Ausgestaltung der Erfindung ist, dass anstatt der Stützen der Rahmen am unteren Ende an beiden Seiten je eine gebogene Kufe besitzt, die einem Kreissegment entspricht, dessen Mittelpunkt der Mittelpunkt der Windewelle ist. Hiermit können die abgehobenen Zargen besonders leicht bewegt werden, weil dann die seitliche Bewegung dem Abrollen eines Rades entspricht. Allerdings muss die Hebevorrichtung in diesem Fall in der Pos. A bzw. in der Pos. B gegen ungewünschtes Abrollen gesichert werden, z. B. durch Unterlegkeile.

Eine weitere Ausgestaltung des Rahmens ist ein Rahmen mit vier Beinen, die am unteren Ende jeweils ein Rad besitzen, mit denen der Rahmen seitlich verschoben werden kann.

Zur Ermittlung des Gewichtes der jeweils angehobenen Zargen ist die Kurbelstange der Winde aus einem dauerelastischem Material wie Federstahl oder glasfaserverstärktem Kunststoff gefertigt. Dadurch biegt sich die Kurbelstange beim Hochkurbeln der Zargen elastisch. Diese Biegung ist ein Maß für das Gewicht der angehobenen Zargen und kann an einem Zifferblatt, das fest mit der Kurbelwelle verbunden ist, abgelesen werden. Hierzu ist vorher eine entsprechende Eichung der Kurbelstangendurchbiegung erfolgt.

### Detaillierte Beschreibung der Erfindung

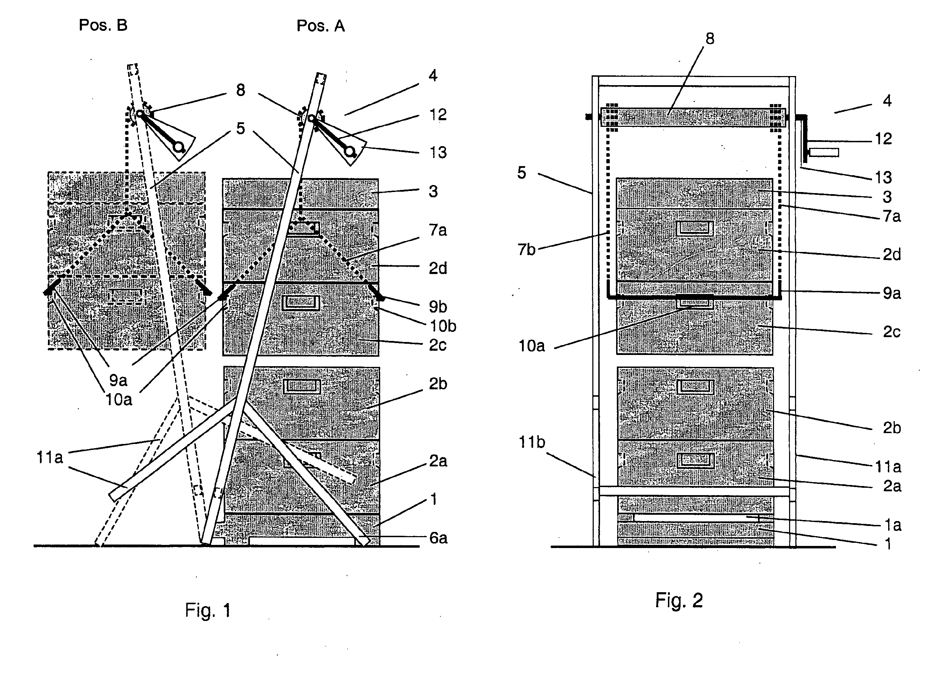

An Hand der Figuren 1 und 2 wird die Erfindung im Detail erläutert.
In beiden Figuren ist eine Magazinbeute gezeigt, die aus einer Bodeneinheit 1, vier Zargen 2a, 2b, 2c, 2d und einem Deckel 3 besteht. Die Bodeneinheit 1 enthält das Bienenflugloch 1a.
Die Figur 1 zeigt die Hebevorrichtung in der Seitendarstellung. Dabei ist die Hebevorrichtung in zwei verschieden Positionen dargestellt, in der Pos. A und in der Pos. B. Die Pos. A zeigt die Hebevorrichtung im Zustand in dem zwei Zargen 2c, 2d und der Deckel 3 der Magazinbeute angehoben sind. Die Pos. B zeigt den Zustand nach dem Abschwenken der beiden angehobenen Zargen 2c, 2d und dem Deckel 3. Diese Pos. B ist zur Verdeutlichung mit gestrichelten Lienen dargestellt.

Die Figur 2 zeigt die Hebevorrichtung von vorne, d.h. die Magazinbeute zeigt mit dem Bienenflugloch 1a nach vorne. Es sind ebenfalls zwei Zargen 2c, 2d und der Deckel 3 angehoben.

Die Fig.1 zeigt in der Pos. A die Stellung der Winde 4 und des Rahmens 5 in einem Zustand mit zwei angehobenen Zargen 2c, 2d und dem Deckel 3. Der Rahmen 5 steht in Schräglage vor der Magazinbeute, sodass die Winde 4 über der Mitte der Magazinbeute platziert ist. Die Schräglage des Rahmens 5 wird durch zwei Stützbeine eingehalten, von denen in der Fig. 1 nur das Stützbein 6a zu sehen ist. Das zweite Stützbein 6b befindet sich an der in der Fig.1 nicht sichtbaren Rahmenseite und zwar in der gleichen Lage wie das Stützbein 6a.
Die Zargen 2c, 2d und der Deckel 3 hängen mittels der Seile 7a und 7b an der Windewelle 8. Die Verbindung zwischen der unteren angehobenen Zarge 2c und den Seilen 7a und 7b erfolgt durch zwei Bügel 9a und 9b. Zu diesem Zweck haben die Bügel 9a und 9b je eine Ausbuchtung, die in die Griffmulden 10 a und 10b der Zarge 2c hineinragen.
Um den Innenraum der Zarge 2b für die imkerlichen Arbeiten frei zu geben, werden die beiden Zargen 2c, 2d und der Deckel 3 durch drehen der Windekurbel 12 angehoben und anschließend wird der Rahmen 5 zusammen mit den beiden Zargen 2c, 2d und dem Deckel 3 aus der Pos. A in die Pos. B geschwenkt. In dieser Pos. B wird nun der Rahmen 5 durch zwei weitere Stützbeine 11a und 11 b gehalten.

Die Windewelle 8 wird mit den angehoben Zargen 2c, 2d und dem Deckel 3 gegen ein Zurückdrehen mit Hilfe eines Sperrzahnrads und einer Sperrklinke gesichert, die nicht in den Figuren gezeigt sind.

Für die Ermittlung des Gewichtes der jeweils angehobenen Zargen ist der Windenkurbelarm 12 einem dauerelastischen Material wie Federstahl oder glasfaserverstärktem Kunststoff. Seine Durchbiegung beim Hochkurbeln einer oder mehrerer Zargen ist ein Maß für deren Gewicht. Dies kann an dem Ziffernblatt 13, das fest mit der Windewelle 8 verbunden ist, abgelesen werden.

Bei einer anderen Art der Ermittlung des Gewichtes der jeweils angehobenen Zargen schlägt der Windenkurbelarm 12 an einer Druckfeder an, die mit einem am Rahmen 5 drehbar gelagerten Hebel (in der Zeichnung nicht dargestellt) befestigt ist.

## Patentansprüche

1. Verfahren für das Anheben und Abschwenken von einer oder mehrerer Zargen bei Bienenbeuten wie Magazinbeuten, wodurch ein freier Zugang von oben und an drei Seiten der nicht angehobenen verbliebenen Magazinbeuteteile ermöglicht wird, **dadurch gekennzeichnet, dass** eine Windewelle 8 über der Mitte der Magazinbeute platziert, die anzuhebende Zarge 2c mit der Windewelle 8 mit mindestens zwei Seilen 7a und 7b verbunden, durch Drehen der Windewelle 8 die Zarge 2c angehoben und danach seitlich abgeschwenkt wird.

2. Vorrichtung für das Anheben und Abschwenken von einer oder mehrerer Zargen bei Bienenbeuten wie Magazinbeuten, wodurch ein freier Zugang von oben und an drei Seiten der nicht angehobenen verbliebenen Magazinbeuteteile ermöglicht wird, **dadurch gekennzeichnet, dass** eine Windewelle 8 in einem Rahmen 5 gelagert ist, der Rahmen 5 durch zwei Stützen 6a, 6b in schräger Position A oder durch zwei Stützen 11 a, 11 b in schräger Position B gehalten wird und die Windewelle 8 mit zwei Seilen 7a, 7b mit zwei Bügeln 9a, 9b verbunden ist.

3. Vorrichtung nach den vorhergehenden Ansprüchen, bei der die Größe des Neigungswinkels des Rahmens 5 mit einer Senkrechten in der Pos. A nahezu gleich ist mit der Größe des zur Senkrechten entgegen gesetzten Neigungswinkels des Rahmens in der Pos. B.

4. Vorrichtung nach den vorhergehenden Ansprüchen, bei der der Rahmen 5 am unteren Ende an beiden Seiten je eine gebogene Kufe besitzt, die einem Kreissegment entspricht, dessen Mittelpunkt der Mittelpunkt der Windewelle 8 ist.

5. Vorrichtung nach den vorhergehenden Ansprüchen, bei der am oberen Teil des Rahmens 5 an den beiden Seiten des Rahmens 5 je eine Stütze drehbar angebracht ist, mit deren Hilfe der Rahmen 5 jeweils in der Pos. A oder Pos. B gestützt wird.

6. Vorrichtung nach den vorhergehenden Ansprüchen, bei der der Rahmen 5 ein Gestell mit drei oder mehr Beinen ist, die am unteren Ende jeweils ein Rad besitzen, mit denen das Gestell seitlich verschoben werden kann.

7. Verfahren zur Ermittlung der angehobenen Bienenbeutenteile, **dadurch gekennzeichnet, dass** der Windenkurbelarm 12 beim Anheben der Zargen 2c, 2d und dem Deckel 3 elastisch gebogen wird und das Gewicht der angehobenen Zargen 2c, 2d und dem Deckel 3 an einem Ziffernblatt 13, das fest mit der Windewelle 8 verbunden ist, abgelesen werden kann.

8. Verfahren zur Ermittlung der angehobenen Bienenbeutenteile, **dadurch gekennzeichnet, dass** der Windenkurbelarm 12 an einer Druckfeder, die in einem am Rahmen 5 drehbar gelagerten Hebel befestigt ist, anschlägt.
